# FASCICULE DE BREVET EUROPEEN

(11) **EP 4 396 514 B1**
(45) Date de publication et mention de la délivrance du brevet: **26.03.2025**
(21) Numéro de dépôt: 22754106.7
(22) Date de dépôt: 29.07.2022
(51) Int. Cl.: F28D 1/04, F28F 19/00

(54) **ÉCHANGEUR THERMIQUE POUR UNE BOUCLE DE FLUIDE RÉFRIGÉRANT**
WÄRMETAUSCHER FÜR EINEN KÜHLMITTELKREISLAUF
HEAT EXCHANGER FOR A COOLANT LOOP

(30) Priorité: 03.09.2021 FR 2109218
(43) Date de publication de la demande: 10.07.2024
(73) Titulaire: VALEO SYSTEMES THERMIQUES, 78320 Le Mesnil Saint-Denis (FR)
(72) Inventeur: DURBECQ, Gael, 78320 Le Mesnil-Saint-Denis (FR); BLANDIN, Jeremy, 78320 Le Mesnil-Saint-Denis (FR); AZZOUZ, Kamel, 78320 Le Mesnil-Saint-Denis (FR)
(74) Mandataire: Valeo Systèmes Thermiques
(86) Numéro de dépôt international: PCT/EP2022/071420
(87) Numéro de publication internationale: WO 2023/030791

(56) Documents cités:
- EP-A1- 2 818 822
- EP-A1- 3 647 711
- US-B2- 11 047 625
- US-B2- 8 118 084

## Description

La présente invention concerne le domaine des échangeurs thermiques pour une boucle de fluide réfrigérant pour véhicule, notamment automobile, et plus particulièrement pour des véhicules hybrides ou électriques. La présente invention concerne en particulier les échangeurs thermiques tels que définis par le préambule de la revendication 1, et tel qu'illustré par le document US 8,118,084B.

De telles boucles de fluide réfrigérant sont destinées à la circulation d'un fluide réfrigérant, notamment dans le cadre d'une installation de chauffage, de ventilation et/ou de climatisation des véhicules. Ces boucles de fluide réfrigérant permettent, grâce à un échangeur thermique, de modifier la température à l'intérieur de l'habitacle du véhicule. Cette modification de la température au sein de l'habitacle résulte notamment de la circulation d'un fluide réfrigérant dans la boucle de fluide réfrigérant, entre un dispositif d'échange thermique disposé dans l'habitacle du véhicule, et un échangeur thermique situé au contact de l'air ambiant en face avant du véhicule. Ainsi, le fluide réfrigérant circulant dans la boucle de fluide réfrigérant absorbe ou cède des calories au niveau de l'échangeur thermique ou du dispositif d'échange thermique en fonction des besoins de refroidissement ou de chauffage de l'habitacle.

L'échangeur thermique situé en face avant du véhicule permet l'échange de calories entre le fluide réfrigérant et un flux d'air traversant cet échangeur thermique. L'un des problèmes d'un tel échangeur thermique réside en ce que son exposition directe à l'air extérieur est susceptible de former du givre sur ce dernier lorsque la température extérieure est faible, et que le taux d'humidité dans l'air extérieur est élevé. En effet, la rencontre entre le flux d'air extérieur froid et humide et le fluide réfrigérant à basse température en entrée de l'échangeur thermique provoque le givrage de la vapeur d'eau contenue dans le flux d'air sur l'échangeur thermique. Un tel givrage de l'échangeur thermique génère ainsi une résistance thermique supplémentaire entre le flux d'air et le fluide réfrigérant et tend à colmater le passage du flux d'air au travers de l'échangeur thermique. On comprend ainsi que le givre tend à diminuer les capacités d'échange thermique de l'échangeur thermique installé en face avant lorsque la boucle de fluide réfrigérant est utilisée en mode chauffage de l'habitacle.

La présente invention vise à pallier cet inconvénient en proposant un échangeur thermique limitant la formation de givre sur ce dernier tout en présentant un encombrement réduit. L'invention permet donc d'augmenter les capacités d'échange thermique de l'échangeur thermique, et *a fortiori* de la boucle de fluide réfrigérant.

Dans ce contexte la présente invention a pour principal objet un échangeur thermique pour une boucle de fluide réfrigérant, comprenant une surface d'échange de chaleur, l'échangeur thermique comprenant un premier circuit d'échange thermique comportant un premier collecteur d'entrée et un premier collecteur de sortie entre lesquels s'étendent longitudinalement un premier ensemble de tubes, le premier collecteur d'entrée participant à délimiter au moins deux chambres collectrices chacune alimentée par au moins un orifice d'entrée, le premier collecteur de sortie comprenant au moins un orifice de sortie, l'échangeur thermique comprenant un deuxième circuit d'échange thermique comportant un deuxième collecteur d'entrée et un deuxième collecteur de sortie entre lesquels s'étendent longitudinalement un deuxième ensemble de tubes, le deuxième collecteur d'entrée comprenant au moins une entrée, le deuxième collecteur de sortie participant à délimiter au moins deux cavités collectrices chacune débouchant sur au moins une sortie, les tubes du premier ensemble de tubes s'empilant en alternance avec les tubes du deuxième ensemble de tubes, l'échangeur thermique comprenant une ligne d'arrivée de fluide réfrigérant et une ligne de sortie de fluide réfrigérant configurées pour être reliées fluidiquement à la boucle de fluide réfrigérant, la ligne d'arrivée étant connectée fluidiquement d'une part à l'un des orifices d'entrée du premier collecteur d'entrée et d'autre part à l'entrée du deuxième collecteur d'entrée, la ligne de sortie étant connectée fluidiquement à l'un des orifices de sortie du deuxième collecteur de sortie et à la sortie du premier collecteur de sortie, caractérisé en ce que l'échangeur thermique comprend au moins une vanne quatre voies apte à prendre une première position dans laquelle la vanne quatre voies relie fluidiquement l'un des orifices d'entrée du premier collecteur d'entrée à la ligne d'arrivée et l'une des sorties du deuxième collecteur de sortie à la ligne de sortie, et au moins une deuxième position dans laquelle la vanne quatre voies relie fluidiquement l'un des orifices d'entrée du premier collecteur d'entrée à la ligne de sortie et l'une des sorties du deuxième collecteur de sortie à la ligne d'arrivée.

La boucle de fluide réfrigérant peut être disposée au sein d'un véhicule, par exemple électrique ou hybride, afin de réchauffer ou refroidir un habitacle dudit véhicule, notamment via un échange de calories au sein de l'échangeur de chaleur entre le fluide réfrigérant et un flux d'air extérieur. La boucle de fluide réfrigérant peut consister en une pompe à chaleur réversible et l'échangeur de chaleur peut être un évapo-condenseur au sein duquel circule le fluide réfrigérant. De manière plus précise, l'échangeur de chaleur comprend une surface d'échange de chaleur au sein de laquelle s'effectuent les échanges de calories entre le flux d'air traversant ladite surface d'échange et le fluide réfrigérant circulant au sein des tubes s'étendant entre les différents collecteurs de l'échangeur thermique, le fluide réfrigérant captant ou cédant des calories au flux d'air en fonction du mode de fonctionnement de la boucle de fluide réfrigérant, c'est-à-dire un mode chauffage ou un mode refroidissement de l'habitacle.

Par ailleurs, on entend ici qu'une première partie du fluide réfrigérant circule à travers l'échangeur thermique en circulant dans le premier circuit d'échange thermique, et qu'une deuxième partie du fluide réfrigérant circule à travers l'échangeur thermique en circulant dans le deuxième circuit d'échange thermique.

Pour cela, la première partie du fluide réfrigérant circule dans le premier ensemble de tubes, par exemple depuis le premier collecteur d'entrée vers le premier collecteur de sortie, la deuxième partie du fluide réfrigérant circulant quant à elle dans le deuxième ensemble de tubes, par exemple depuis le deuxième collecteur d'entrée vers le deuxième collecteur de sortie.

Pour contribuer à la résistance au givrage de la surface d'échange, le premier collecteur d'entrée et le deuxième collecteur de sortie sont disposés à une première extrémité longitudinale des tubes tandis que le deuxième collecteur d'entrée et le premier collecteur de sortie sont installés au niveau d'une deuxième extrémité longitudinale des tubes opposées à la première extrémité longitudinale desdits tubes. On comprend de cela que le sens de circulation de la première partie de fluide réfrigérant dans le premier ensemble de tubes est opposé au sens de circulation de la deuxième partie de fluide réfrigérant dans le deuxième ensemble de tubes.

Selon une alternative de l'invention, le premier collecteur d'entrée et le deuxième collecteur de sortie forment un ensemble monobloc.

Selon une autre alternative de l'invention, le deuxième collecteur d'entrée et le premier collecteur de sortie forment un ensemble monobloc.

Le terme « monobloc » signifie par exemple inséparable l'un de l'autre sans destruction de l'un ou de l'autre des collecteurs. Le premier collecteur et le deuxième collecteur sont par exemple deux tubes brasés, ou un même tube qui comprend une partition interne.

L'alternance de sens de circulation du fluide réfrigérant entre deux tubes successifs optimise la résistance au givragede la surface d'échange. On comprend ici que cette opposition de sens de circulation du fluide réfrigérant entre deux tubes voisins est une solution astucieuse pour limiter l'apparition de givre sur et entre les tubes de l'échangeur thermique.

Par ailleurs, la vanne quatre voies permet de guider le fluide dans un premier schéma de circulation de fluide réfrigérant ou dans un deuxième schéma de circulation de fluide réfrigérant à travers les premiers et deuxièmes circuits d'échange thermique. On comprend que dans chacun des schémas de circulation de fluide réfrigérant, ce dernier circule dans un premier sens de circulation dans un tube, et dans un sens de circulation opposé dans au moins un des tubes voisins.

Selon une caractéristique optionnelle de l'invention, au moins le premier collecteur d'entrée comprend une paroi de séparation participant à définir une première chambre collectrice et une deuxième chambre collectrice, au moins un premier orifice d'entrée alimentant la première chambre collectrice et au moins un deuxième orifice d'entrée alimentant la deuxième chambre collectrice.

La première chambre collectrice est rendue étanche fluidiquement par rapport à la deuxième chambre collectrice par la paroi de séparation. On entend ici que la paroi de séparation entre la première chambre collectrice et la deuxième chambre interdit toute circulation de fluide réfrigérant directement entre les deux chambres collectrices. Le fluide réfrigérant passe ainsi par au moins un tube pour circuler d'une chambre collectrice à l'autre.

De plus, on comprend que chacune des chambres collectrices est alimentée par un orifice d'entrée de fluide réfrigérant, c'est-à-dire que, par exemple, le fluide réfrigérant pénètre dans l'une des chambres collectrices par l'orifice d'entrée connectée à ladite chambre avant de circuler à travers la chambre puis vers au moins l'un des tubes du premier circuit d'échange thermique.

Selon une autre caractéristique optionnelle de l'invention, au moins le deuxième collecteur de sortie comprend une paroi de séparation participant à définir une première cavité collectrice et une deuxième cavité collectrice, la première cavité collectrice débouchant sur une première sortie et la deuxième cavité collectrice débouchant sur une deuxième sortie.

La première cavité collectrice est rendue étanche fluidiquement par rapport à la deuxième cavité collectrice par la paroi de séparation. On entend ici que la paroi de séparation entre la première cavité collectrice et la deuxième cavité interdit toute circulation de fluide réfrigérant directement entre les deux cavités collectrices. Le fluide réfrigérant passe ainsi par au moins un tube pour circuler d'une cavité collectrice à l'autre.

De plus, on comprend que chacune des cavités collectrices présente une sortie de fluide réfrigérant, c'est-à-dire que, par exemple, le fluide réfrigérant pénètre dans l'une des cavités collectrices par au moins l'un des tubes du deuxième circuit d'échange thermique connecté à ladite cavité avant de circuler à travers la cavité puis de sortir de cette cavité par la sortie de fluide réfrigérant connectée à ladite cavité.

Selon une autre caractéristique optionnelle de l'invention, la ligne d'arrivée est reliée fluidiquement au premier orifice d'entrée, au deuxième orifice d'entrée du premier collecteur d'entrée et à l'entrée du deuxième collecteur d'entrée lorsque la vanne quatre voies est dans la première position, la ligne de sortie étant raccordée fluidiquement à l'orifice de sortie du premier collecteur de sortie et à la première sortie et à la deuxième sortie du deuxième collecteur de sortie.

Selon une autre caractéristique optionnelle de l'invention, la ligne d'arrivée est reliée fluidiquement au premier orifice d'entrée du premier collecteur d'entrée et à la deuxième sortie du deuxième collecteur de sortie lorsque la vanne quatre voies est dans la deuxième position, la ligne de sortie étant raccordée fluidiquement au deuxième orifice d'entrée du premier collecteur d'entrée et à la première sortie du deuxième collecteur de sortie.

Selon une autre caractéristique optionnelle de l'invention, la ligne de sortie comprend au moins une première conduite reliée à l'orifice de sortie du premier collecteur de sortie et sur laquelle est installée une vanne, la vanne étant apte à prendre une première position autorisant une circulation de fluide réfrigérant dans la première conduite et une deuxième position interdisant la circulation de fluide réfrigérant dans la première conduite.

On comprend ici que la vanne, lorsqu'elle est dans la première position, permet au fluide réfrigérant d'être évacué depuis l'orifice de sortie du premier collecteur de sortie directement vers la ligne de sortie à travers la première conduite.

Inversement, lorsque la vanne est dans la deuxième position, la vanne bloque la circulation du fluide réfrigérant directement vers la ligne de sortie à travers la première conduite, obligeant le fluide réfrigérant à circuler vers la deuxième chambre collectrice et vers le deuxième orifice d'entrée.

Avantageusement, la vanne est placée uniquement dans la première position ou dans la deuxième position. Autrement dit, la vanne peut soit autoriser la circulation du fluide réfrigérant à travers la première conduite ou la bloquer.

Selon une autre caractéristique optionnelle de l'invention, la ligne de sortie comprend une deuxième conduite reliée fluidiquement à la première sortie du deuxième collecteur de sortie. La deuxième conduite est distincte de la première conduite.

Selon une autre caractéristique optionnelle de l'invention, la ligne de sortie comprend une troisième conduite reliée à la vanne quatre voies, la vanne quatre voies reliant fluidiquement la troisième conduite à la deuxième sortie du deuxième collecteur de sortie lorsque la vanne quatre voies prend la première position, la vanne quatre voies reliant fluidiquement la troisième conduite au deuxième orifice d'entrée du premier collecteur d'entrée lorsque la vanne quatre voies prend la deuxième position.

Selon une autre caractéristique optionnelle de l'invention, la ligne d'arrivée comprend au moins un premier canal relié à l'entrée du deuxième collecteur d'entrée et sur laquelle est installée une valve, la valve étant apte à prendre une première position autorisant une circulation de fluide réfrigérant dans le premier canal et une deuxième position interdisant la circulation de fluide réfrigérant dans le premier canal.

On comprend ici que la valve, lorsqu'elle est dans la première position, permet d'alimenter en fluide réfrigérant le deuxième collecteur d'entrée directement depuis la ligne d'arrivée, le fluide réfrigérant circulant à travers le premier canal.

Inversement, lorsque la valve est dans la deuxième position, la valve bloque la circulation du fluide réfrigérant directement vers l'entrée de fluide réfrigérant du deuxième collecteur d'entrée depuis la ligne d'arrivée à travers le premier canal, le fluide réfrigérant alimentant alors le deuxième circuit d'échange thermique en passant par la deuxième sortie de fluide réfrigérant de la deuxième cavité collectrice du deuxième collecteur de sortie.

Avantageusement, la valve est placée uniquement dans la première position ou dans la deuxième position. Autrement dit, la valve peut soit autoriser la circulation du fluide réfrigérant à travers le premier canal ou la bloquer.

Selon une autre caractéristique optionnelle de l'invention, la ligne d'arrivée comprend un deuxième canal relié fluidiquement au premier orifice d'entrée du premier collecteur d'entrée. Le deuxième canal est distinct du premier canal.

Selon une autre caractéristique optionnelle de l'invention, la ligne d'arrivée comprend un troisième canal relié à la vanne quatre voies, la vanne quatre voies reliant fluidiquement le troisième canal au deuxième orifice d'entrée du premier collecteur d'entrée lorsque la vanne quatre voies prend la première position, la vanne quatre voies reliant fluidiquement le troisième canal à la deuxième sortie du deuxième collecteur de sortie lorsque la vanne quatre voies prend la deuxième position.

Selon une autre caractéristique optionnelle de l'invention, la vanne quatre voies, la vanne et la valve sont chacune dans leur première position pour utiliser l'échangeur thermique selon l'invention en un mode évaporation de fluide réfrigérant.

On comprend par « première position » le fait que la vanne quatre voies, la vanne et la valve coopèrent pour guider le fluide réfrigérant à travers l'échangeur thermique utilisé en mode d'évaporation du fluide réfrigérant. La vanne quatre voies, la vanne et la valve sont dans la première position notamment lorsque le boucle de fluide réfrigérant est utilisée pour chauffer un flux d'air envoyé vers l'habitacle du véhicule.

Par ailleurs, dans le mode évaporation du fluide réfrigérant, le fluide réfrigérant capte des calories en circulant à travers les tubes, les calories étant cédées par un flux d'air circulant au travers de la surface d'échange thermique, c'est-à-dire autour et entre les tubes. Le fluide réfrigérant arrivant à l'état liquide ou diphasique dans la ligne d'arrivée, il change d'état pour passer d'un état liquide à un état gazeux à cause de l'augmentation de sa température provoquée par la captation de calories en passant dans les tubes.

Selon une autre caractéristique optionnelle de l'invention, la vanne quatre voies, la vanne et la valve sont chacune dans leur deuxième position pour utiliser l'échangeur thermique selon l'invention en un mode de condensation de fluide réfrigérant.

On comprend par « deuxième position » le fait que la vanne quatre voies, la vanne et la valve coopèrent pour guider le fluide réfrigérant à travers l'échangeur thermique utilisé en mode condensation du fluide réfrigérant. La vanne quatre voies, la vanne et la valve sont dans la deuxième position notamment lorsque la boucle de fluide réfrigérant est utilisée pour refroidir un flux d'air envoyé vers l'habitacle du véhicule

Par ailleurs, dans le mode condensation du fluide réfrigérant, le fluide réfrigérant cède des calories en circulant à travers les tubes au profit du flux d'air circulant au travers de la surface d'échange thermique, c'est-à-dire autour et entre les tubes. Le fluide réfrigérant arrivant alors à l'état gazeux dans la ligne d'arrivée, il change d'état pour passer d'un état gazeux à un état liquide à cause de la diminution de sa température provoquée par la cession de calories en passant dans les tubes.

Selon une autre caractéristique optionnelle de l'invention, le premier circuit et le deuxième circuit sont des circuits en « I » vus dans un plan principal d'extension de la surface d'échange de chaleur lorsque la vanne quatre voies, la vanne et la valve sont dans leur première position.

On entend par « circuits en « I » » que le fluide réfrigérant circule selon un seul sens de circulation, parallèle à l'axe d'allongement principal des tubes, depuis le premier collecteur d'entrée vers le deuxième collecteur de sortie pour le premier circuit d'échange thermique et depuis le deuxième collecteur d'entrée vers le deuxième collecteur de sortie pour le deuxième circuit d'échange thermique.

Ainsi, lorsque la vanne quatre voies, la vanne et la valve sont chacune dans la première position, la ligne d'arrivée alimente en fluide réfrigérant, dans le premier circuit d'échange thermique, la première chambre collectrice et la deuxième chambre collectrice en passant respectivement par le premier orifice d'entrée et le deuxième orifice d'entrée, puis le fluide réfrigérant circule jusqu'au premier collecteur de sortie en travers le premier ensemble de tubes, le fluide réfrigérant étant enfin évacué par l'orifice de sortie du premier collecteur de sortie vers la ligne de sortie.

Similairement, dans le deuxième circuit d'échange thermique, lorsque la vanne quatre voies, la vanne et la valve sont chacune dans la première position, la ligne d'arrivée alimente en fluide réfrigérant le deuxième collecteur d'entrée, le fluide réfrigérant passant par l'entrée de fluide réfrigérant pour alimenter le deuxième collecteur d'entrée, le fluide réfrigérant circulant ensuite vers chacune des cavités collectrices du deuxième collecteur de sortie, le fluide réfrigérant étant enfin évacué par chacune des sorties du deuxième collecteur de sortie vers la ligne de sortie.

Selon une autre caractéristique optionnelle de l'invention, le premier circuit et le deuxième circuit sont des circuits en « U » vus dans un plan principal d'extension de la surface d'échange de chaleur lorsque la vanne quatre voies, la vanne et la valve sont dans leur deuxième position.

On entend par « circuits en « U » » que le fluide réfrigérant circule selon un premier sens de circulation et selon un deuxième sens de circulation au sein de la surface d'échange thermique, chacun de ces sens de circulation étant parallèle à l'axe d'allongement principal des tubes, le fluide réfrigérant passant d'un collecteur à l'autre selon le premier sens de circulation, puis revient au premier collecteur selon le deuxième sens de circulation.

Ainsi, lorsque la vanne quatre voies, la vanne et la valve sont chacune dans la deuxième position, la ligne d'arrivée alimente en fluide réfrigérant, dans le premier circuit d'échange thermique, seulement la première chambre collectrice en passant par le premier orifice d'entrée, le fluide réfrigérant circulant ensuite jusqu'au premier collecteur de sortie à travers une partie du premier ensemble de tubes, le fluide réfrigérant circulant ensuite depuis le premier collecteur de sortie vers la deuxième chambre collectrice à travers une autre partie du premier ensemble de tubes pour enfin être évacué vers la ligne de sortie à travers le deuxième orifice d'entrée. On comprend que la vanne positionnée dans la deuxième position bloque la circulation du fluide réfrigérant vers la ligne de sortie et force la circulation du fluide réfrigérant depuis le premier collecteur de sortie vers la deuxième chambre collectrice du premier collecteur d'entrée.

Similairement, lorsque la vanne quatre voies, la vanne et la valve sont chacune dans la deuxième position, la ligne d'arrivée alimente en fluide réfrigérant, dans le deuxième circuit d'échange thermique, seulement la deuxième cavité collectrice en passant par la deuxième sortie de fluide réfrigérant, le fluide réfrigérant circulant ensuite jusqu'au deuxième collecteur d'entrée à travers une partie du deuxième ensemble de tubes, le fluide réfrigérant circulant ensuite depuis le deuxième collecteur d'entrée vers la première cavité collectrice à travers une autre partie du deuxième ensemble de tubes pour enfin être évacué vers la ligne de sortie à travers la première sortie de fluide réfrigérant. On comprend que la valve positionnée dans la deuxième position bloque la circulation du fluide réfrigérant depuis la ligne d'arrivée vers l'entrée de fluide réfrigérant du deuxième collecteur d'entrée et force la circulation du fluide réfrigérant depuis le deuxième collecteur d'entrée vers la première cavité collectrice du deuxième collecteur de sortie.

La présente invention a également pour objet une boucle de fluide réfrigérant d'un véhicule comprenant au moins un organe de compression, un échangeur thermique tel que décrit dans le présent document, un premier organe de détente et un deuxième organe de détente, un premier échangeur de chaleur et un réseau de canalisation reliant entre eux ces composants de la boucle de fluide réfrigérant.

Selon une autre caractéristique optionnelle de l'invention, la ligne d'arrivée de l'échangeur thermique est raccordée au deuxième organe de détente.

Selon une autre caractéristique optionnelle de l'invention, la boucle de fluide réfrigérant comprend au moins un dispositif d'accumulation de fluide réfrigérant et un deuxième échangeur de chaleur.

Selon une autre caractéristique optionnelle de l'invention, la boucle de fluide réfrigérant comprend au moins un organe de régulation du fluide réfrigérant, l'organe de régulation étant apte à prendre une première position reliant directement fluidiquement le premier échangeur de chaleur à la ligne de sortie et une deuxième position bloquant la circulation du fluide réfrigérant à travers une portion de la ligne de sortie.

La présente invention concerne enfin un procédé de contrôle d'une boucle de fluide réfrigérant selon l'une des caractéristiques précédentes, procédé comprenant une étape de chauffage d'un habitacle du véhicule durant laquelle la vanne quatre voies, la vanne et la valve sont placées chacune dans la première position et une étape de refroidissement de l'habitacle du véhicule durant laquelle la vanne quatre voies, la vanne et la valve sont placées chacune dans la deuxième position.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation en perspective d'un échangeur thermique selon l'invention ;
[Fig. 2] est une représentation schématique de l'échangeur thermique représenté sur la figure 1 dont une vanne quatre voies est positionnée sur une première position ;
[Fig. 3] est une représentation schématique de l'échangeur thermique représenté sur la figure 1 dont une vanne quatre voies est positionnée sur une deuxième position ;
[Fig. 4] est une représentation schématique d'une boucle de fluide réfrigérant comprenant l'échangeur thermique représenté sur la figure 1 et dont une vanne quatre voies de l'échangeur thermique est positionnée dans une première position ;
[Fig. 5] est une représentation schématique d'une boucle de fluide réfrigérant comprenant l'échangeur thermique représenté sur la figure 1 et dont une vanne quatre voies de l'échangeur thermique est positionnée dans une deuxième position.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

De plus, les termes « en amont » et « en aval » utilisés dans la suite de la description font référence au sens de circulation d'un fluide réfrigérant à travers l'échangeur thermique et la boucle de fluide réfrigérant.

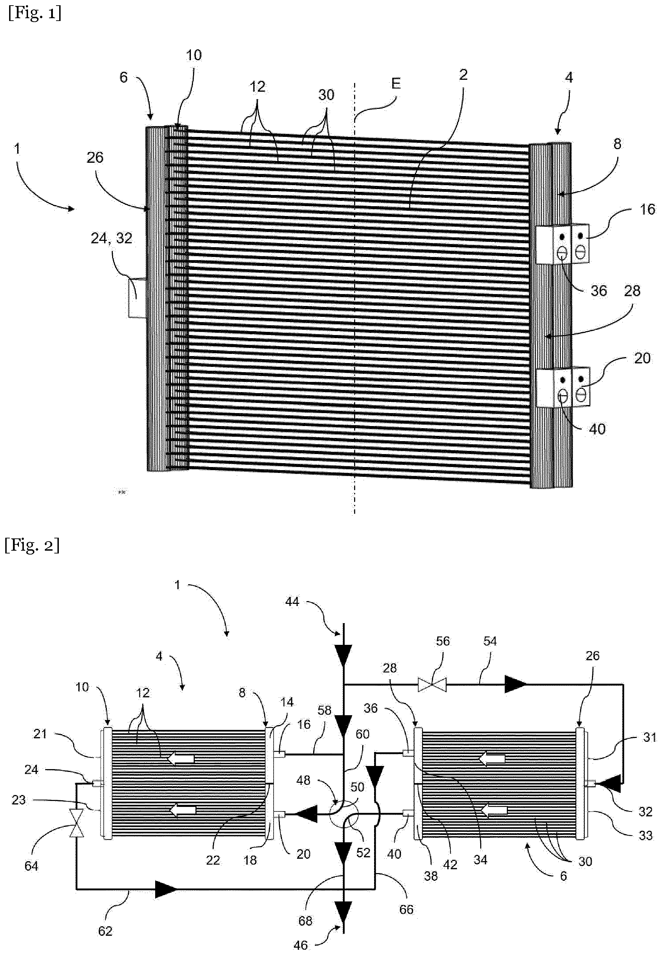

Sur la figure 1 est illustré un échangeur thermique 1 selon l'invention et apte à être traversé par un flux d'air, à l'extérieur de celui-ci, et par un fluide réfrigérant circulant à l'intérieur de cet échangeur thermique 1, ce dernier étant configuré pour être intégré à une boucle de fluide réfrigérant installée sur un véhicule électrique et/ou hybride. Plus précisément, au sein de l'échangeur thermique 1, le fluide réfrigérant est traité thermiquement de sorte à être réchauffé ou refroidi, puis est entraîné en circulation à travers la boucle de fluide réfrigérant.

Tel qu'illustré sur la figure 1, l'échangeur thermique 1 selon l'invention comprend une surface d'échange de chaleur 2 qui s'étend dans un plan principal d'extension et qui est destiné à être traversée par un flux d'air en provenance de l'extérieur d'un habitacle d'un véhicule. C'est au niveau de la surface d'échange de chaleur 2 de l'échangeur thermique 1 qu'est opéré l'échange de chaleur entre le fluide réfrigérant et le flux d'air.

Selon l'invention, l'échangeur thermique 1 comprend également au moins un premier circuit d'échange de chaleur 4 et un deuxième circuit d'échange de chaleur 6 à travers lesquels circule le fluide réfrigérant. Ces deux circuits d'échange de chaleur participent au moins en partie à délimiter la surface d'échange de chaleur 2.

Tel que visible sur la figure 1, le premier circuit d'échange de chaleur 4 comprend un premier collecteur d'entrée 8 de fluide réfrigérant, un premier collecteur de sortie 10 de fluide réfrigérant et au moins un premier ensemble de tubes 12 s'étendant longitudinalement entre le premier collecteur d'entrée 8 et le premier collecteur de sortie 10. En d'autres termes, les tubes 12 du premier circuit d'échange de chaleur 4 s'étendent le long d'une direction d'allongement principal entre le premier collecteur d'entrée 8 et le premier collecteur de sortie 10. De plus, le premier ensemble de tubes 12 relie fluidiquement le premier collecteur d'entrée 8 au premier collecteur de sortie 10, c'est-à-dire qu'un fluide circulant dans le premier collecteur d'entrée 8 peut circuler jusqu'au premier collecteur de sortie 10 à travers le premier ensemble de tubes 12.

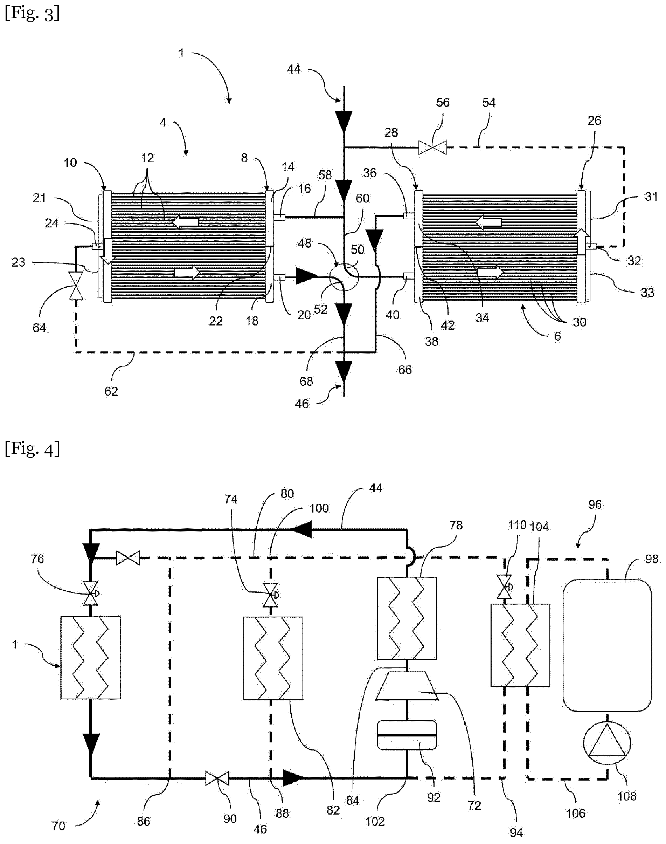

Selon l'invention et tel que plus particulièrement visible sur les figures 2 et 3, le premier collecteur d'entrée 8 loge au moins deux chambres collectrices 14, 18 chacune alimentée par au moins un orifice d'entrée 16, 20. Plus précisément, le premier collecteur d'entrée 8 comprend une première chambre collectrice 14 alimentée en fluide réfrigérant par un premier orifice d'entrée 16 de fluide réfrigérant et une deuxième chambre collectrice 18 alimentée en fluide réfrigérant par un deuxième orifice d'entrée 20 de fluide réfrigérant.

Par ailleurs, les figures 2 et 3 sont chacune une représentation d'au moins le premier circuit d'échange de chaleur 4 et du deuxième circuit d'échange de chaleur 6 illustrés de manière séparée, pour faciliter la compréhension. Cependant, ces circuits d'échange de chaleur 4, 6 sont imbriqués l'un dans l'autre pour former un composant qu'est l'échangeur thermique 1 selon l'invention.

Le premier collecteur d'entrée 8 comprend une paroi de séparation 22 participant à délimiter la première chambre collectrice 14 et la deuxième chambre collectrice 18. Avantageusement, la paroi de séparation 22 délimite les deux chambres collectrices 14, 18 de façon qu'elles présentent un même volume.

La première chambre collectrice 14 est étanche fluidiquement par rapport à la deuxième chambre collectrice 18 par la paroi de séparation 22. On entend ici que la paroi de séparation 22 entre la première chambre collectrice 14 et la deuxième chambre collectrice 18 interdit toute circulation de fluide réfrigérant directement entre les deux chambres collectrices 14, 18.

Chacune des chambres collectrices 14, 18 est reliée au premier collecteur de sortie 10 par le premier ensemble de tubes 12. Plus particulièrement, le premier orifice d'entrée 16 et la première chambre collectrice 14 sont raccordés fluidiquement au premier collecteur de sortie 10 par une partie 21 du premier ensemble de tubes 12, tandis que le deuxième orifice d'entrée 20 et la deuxième chambre collectrice 18 sont raccordés fluidiquement au premier collecteur de sortie 10 par une autre partie 23 du premier ensemble de tubes 12.

Le premier collecteur de sortie 10 comprend quant à lui au moins un orifice de sortie 24 reliant fluidiquement le premier collecteur de sortie 10 à une conduite, par exemple.

De façon similaire, le deuxième circuit d'échange de chaleur 6 comprend par ailleurs un deuxième collecteur d'entrée 26 de fluide réfrigérant, un deuxième collecteur de sortie 28 de fluide réfrigérant et au moins un deuxième ensemble de tubes 30 s'étendant longitudinalement entre le deuxième collecteur d'entrée 26 et le deuxième collecteur de sortie 28. En d'autres termes, les tubes 30 du deuxième circuit d'échange de chaleur 6 s'étendent le long de la direction d'allongement principal entre le deuxième collecteur d'entrée 26 et le deuxième collecteur de sortie 28. De plus, le deuxième ensemble de tubes 3o relie fluidiquement le deuxième collecteur d'entrée 26 au deuxième collecteur de sortie 28, c'est-à-dire qu'un fluide circulant dans le deuxième collecteur d'entrée 26 peut circuler jusqu'au deuxième collecteur de sortie 28 à travers le deuxième ensemble de tubes 30.

Le deuxième collecteur d'entrée 26 comprend quant à lui au moins une entrée de fluide 32 réfrigérant reliant fluidiquement le deuxième collecteur d'entrée 26 à un canal, par exemple.

Le deuxième collecteur de sortie 28 participe à délimiter au moins deux cavités collectrices 34, 38 chacune débouchant sur au moins une sortie 36, 40 de fluide réfrigérant. Plus précisément, le deuxième collecteur de sortie 28 comprend une première cavité collectrice 34 débouchant sur une première sortie 36 de fluide réfrigérant et une deuxième cavité collectrice 38 débouchant sur une deuxième sortie 40 de fluide réfrigérant.

Le deuxième collecteur de sortie 28 comprend une autre paroi de séparation 42 participant à délimiter la première cavité collectrice 34 et la deuxième cavité collectrice 38. Avantageusement, la paroi de séparation 22 délimite les deux cavités collectrices de façon qu'elles présentent un même volume.

La première cavité collectrice 34 est étanche fluidiquement par rapport à la deuxième cavité collectrice 38 par la paroi de séparation 42. On entend ici que la paroi de séparation 42 entre la première cavité collectrice 34 et la deuxième cavité collectrice 38 interdit toute circulation de fluide réfrigérant directement entre les deux cavités collectrices 34, 38.

Chacune des cavités collectrices 34, 38 est reliée au deuxième collecteur d'entrée 26 par le deuxième ensemble de tubes 30. Plus particulièrement, le deuxième collecteur d'entrée 26 est raccordé fluidiquement à la première cavité collectrice 34 et à la première sortie 36 par une partie 31 du deuxième ensemble de tubes 30, le deuxième collecteur d'entrée 26 étant raccordé fluidiquement à la deuxième cavité collectrice 38 et à la deuxième sortie 40 par une autre partie 33 du deuxième ensemble de tubes 30.

Selon l'invention et tel qu'illustré sur les figures 1 à 3, les tubes du premier ensemble de tubes 12 s'empilent en alternance avec les tubes du deuxième ensemble de tubes 30 le long d'une direction d'empilement E s'inscrivant dans un plan d'extension de la surface d'échange de chaleur 2 et perpendiculaire à une direction d'allongement principal d'au moins un des tubes 12, 30. Autrement dit, au moins un des tubes du premier ensemble de tubes 12 est encadré de part et d'autre selon la direction d'empilement E par deux tubes du deuxième ensemble de tubes 30, et au moins un des tubes du deuxième ensemble de tubes 30 est encadré de part et d'autre selon la direction d'empilement E par deux tubes du premier ensemble de tubes 12.

De plus, le premier collecteur d'entrée 8 et le deuxième collecteur de sortie 28 sont disposés à une première extrémité longitudinale des tubes 12, 30, le deuxième collecteur d'entrée 26 et le premier collecteur de sortie 10 étant quant à eux installés au niveau d'une deuxième extrémité longitudinale des tubes 12, 30. En d'autres termes, le premier collecteur d'entrée 8 et le deuxième collecteur de sortie 28 sont opposés au deuxième collecteur d'entrée 26 et au deuxième collecteur de sortie 28 par rapport aux tubes 12, 30.

Selon une alternative de l'invention, le premier collecteur d'entrée 8 et le deuxième collecteur de sortie 28 forment un ensemble monobloc. En d'autres termes, le premier collecteur d'entrée 8 et le deuxième collecteur de sortie 28 sont associés dès leur manufacture de sorte qu'une dissociation de l'un des collecteurs 8, 28 entraînerait la destruction au moins partielle de l'un ou l'autre des collecteurs 8, 28.

Selon une autre alternative de l'invention, le deuxième collecteur d'entrée 26 et le premier collecteur de sortie 10 forment un ensemble monobloc. En d'autres termes, le deuxième collecteur d'entrée 26 et le premier collecteur de sortie 10 sont associés dès leur manufacture de sorte que la dissociation de l'un des collecteurs 10, 26 entraînerait la destruction au moins partielle de l'un ou l'autre des collecteurs 10, 26.

Tel que plus particulièrement visible sur les figures 2 et 3, l'échangeur thermique 1 comprend une ligne d'arrivée 44 de fluide réfrigérant et une ligne de sortie 46 du fluide réfrigérant configurées pour être reliées fluidiquement à la boucle de fluide réfrigérant. La ligne d'arrivée 44 est au moins connectée fluidiquement d'une part à l'un des orifices d'entrée 16, 20 du premier collecteur d'entrée 8 et d'autre part à l'entrée 32 du deuxième collecteur d'entrée 26. La ligne de sortie 46 étant au moins connectée fluidiquement à l'orifice de sortie 24 du premier collecteur de sortie 10 et à l'une des sorties 36, 40 du deuxième collecteur de sortie 28.

Selon l'invention, l'échangeur thermique 1 comprend au moins une vanne quatre voies 48 apte à prendre une première position dans laquelle la vanne quatre voies 48 relie fluidiquement l'un des orifices d'entrée 16, 20 du premier collecteur d'entrée 8 à la ligne d'arrivée 44 et l'une des sorties 36, 40 du deuxième collecteur de sortie 28 à la ligne de sortie 46, et au moins une deuxième position dans laquelle la vanne quatre voies 48 relie fluidiquement l'un des orifices d'entrée 16, 20 du premier collecteur d'entrée 8 à la ligne de sortie 46 et l'une des sorties 36, 40 du deuxième collecteur de sortie 28 à la ligne d'arrivée 44.

Plus particulièrement, la vanne quatre voies 48 comprend une première passe 50 connectée fluidiquement à la ligne d'arrivée 44 quel que soit la position de la vanne quatre voies 48, et une deuxième passe 52 connectée fluidiquement à la ligne de sortie 46 quel que soit la position de la vanne quatre voies 48.

Par ailleurs, lorsque la vanne quatre voies 48 est dans la première position, la première passe 50 connecte fluidiquement la ligne d'arrivée 44 au deuxième orifice d'entrée 20 du premier collecteur d'entrée 8, la deuxième passe 52 connectant fluidiquement la deuxième sortie 40 du deuxième collecteur de sortie 28 à la ligne de sortie 46. Lorsque la vanne quatre voies 48 est dans la deuxième position, la première passe 50 connecte fluidiquement la ligne d'arrivée 44 à la deuxième sortie 40 du deuxième collecteur de sortie 28, la deuxième passe 52 connectant fluidiquement le deuxième orifice d'entrée 20 du premier collecteur d'entrée 8 à la ligne de sortie 46.

On comprend de ce qui précède que, lorsque la vanne quatre voies 48 est dans la première position, la ligne d'arrivée 44 est reliée fluidiquement au premier orifice d'entrée 16 et au deuxième orifice d'entrée 20 du premier collecteur d'entrée 8 ainsi qu'à l'entrée du deuxième collecteur d'entrée 26. La ligne de sortie 46 est quant à elle raccordée fluidiquement à l'orifice de sortie 24 du premier collecteur de sortie 10 et à la première sortie 36 et à la deuxième sortie 40 du deuxième collecteur de sortie 28.

Dans le cas où la vanne quatre voies 48 est dans la deuxième position, la ligne d'arrivée 44 est alors reliée fluidiquement au premier orifice d'entrée 16 du premier collecteur d'entrée 8 et à la deuxième sortie 40 du deuxième collecteur de sortie 28, tandis que la ligne de sortie 46 est raccordée fluidiquement au deuxième orifice d'entrée 20 du premier collecteur d'entrée 8 et à la première sortie 36 du deuxième collecteur de sortie 28.

Par ailleurs, la ligne d'arrivée 44 comprend au moins un premier canal 54 relié fluidiquement à l'entrée 32 du deuxième collecteur d'entrée 26 et sur laquelle est installée une valve 56. Selon l'invention, la valve 56 est apte à prendre une première position autorisant une circulation de fluide réfrigérant dans le premier canal 54 et une deuxième position interdisant la circulation de fluide réfrigérant dans le premier canal 54.

On comprend ici que la valve 56, lorsqu'elle est dans la première position, permet d'alimenter en fluide réfrigérant le deuxième collecteur d'entrée 26 directement depuis la ligne d'arrivée 44, le fluide réfrigérant circulant à travers le premier canal 54. Inversement, lorsque la valve 56 est dans la deuxième position, la valve 56 bloque la circulation du fluide réfrigérant directement vers l'entrée de fluide 32 réfrigérant du deuxième collecteur d'entrée 26 depuis la ligne d'arrivée 44 à travers le premier canal 54.

Avantageusement, la valve 56 est placée uniquement dans la première position ou dans la deuxième position. Autrement dit, la valve 56 peut soit autoriser la circulation du fluide réfrigérant à travers le premier canal 54 ou la bloquer.

De plus, la ligne d'arrivée 44 comprend un deuxième canal 58 relié fluidiquement au premier orifice d'entrée 16 du premier collecteur d'entrée 8 et un troisième canal 60 relié à la vanne quatre voies 48. Plus particulièrement, le troisième canal 60 est relié fluidiquement à la première passe 50 de la vanne quatre voies 48 lorsque cette dernière est dans la première position et également lorsque cette dernière est dans la deuxième position. En d'autres termes, le troisième canal 60 est raccordé fluidiquement au deuxième orifice d'entrée 20 du premier collecteur d'entrée 8 par l'intermédiaire de la première passe 50 de la vanne quatre voies 48 ou à la deuxième sortie 40 du deuxième collecteur de sortie 28 par l'intermédiaire de la première passe 50 de la vanne quatre voies 48.

Similairement, la ligne de sortie 46 comprend au moins une première conduite 62 reliée à l'orifice de sortie 24 du premier collecteur de sortie 10 et sur laquelle est installée une vanne 64. La vanne 64 est apte à prendre une première position autorisant une circulation de fluide réfrigérant dans la première conduite 62 et une deuxième position interdisant la circulation de fluide réfrigérant dans la première conduite 62.

On comprend ici que la vanne 64, lorsqu'elle est dans la première position, permet au fluide réfrigérant d'être évacué depuis l'orifice de sortie 24 du premier collecteur de sortie 10 directement vers la ligne de sortie 46 à travers la première conduite 62. Inversement, lorsque la vanne 64 est dans la deuxième position, la vanne 64 bloque la circulation du fluide réfrigérant directement vers la ligne de sortie 46 depuis l'orifice de sortie 24 du premier collecteur de sortie 10 à travers la première conduite 62.

Avantageusement, la vanne 64 est placée uniquement dans la première position ou dans la deuxième position. Autrement dit, la vanne 64 peut soit autoriser la circulation du fluide réfrigérant à travers la première conduite 62 ou la bloquer.

De plus, la ligne de sortie 46 comprend une deuxième conduite 66 reliée fluidiquement à la première sortie 36 du deuxième collecteur de sortie 28 et une troisième conduite 68 reliée à la vanne quatre voies 48. Plus précisément, la troisième conduite 68 est reliée fluidiquement à la première passe 50 de la vanne quatre voies 48 lorsque cette dernière est dans la deuxième position ou également lorsque cette dernière est dans la première position. Autrement dit, la troisième conduite 68 est raccordée fluidiquement au deuxième orifice d'entrée 20 du premier collecteur d'entrée 8 par l'intermédiaire de la deuxième passe 52 lorsque la vanne quatre voies 48 est dans la deuxième position, ou est raccordée fluidiquement à la deuxième sortie 40 du deuxième collecteur de sortie 28 par l'intermédiaire de la deuxième passe 52 lorsque la vanne quatre voies 48 est dans la première position.

On va maintenant décrire la circulation du fluide réfrigérant au sein de l'échangeur thermique 1, notamment en référence aux figures 2 et 3.

Tel que visible sur les figures 2 et 3, le fluide réfrigérant entre dans l'échangeur thermique 1 en circulant à travers la ligne d'arrivée 44, puis à travers des premier, deuxième et troisième canaux 54, 58, 60.

Selon la position de la vanne quatre voies 48, de la vanne 64 et de la valve 56, le fluide réfrigérant circule dans le premier circuit d'échange de chaleur 4 et dans le deuxième circuit d'échange de chaleur 6 de différentes façons.

Tel qu'illustré sur la figure 2, la vanne quatre voies 48, la vanne 64 et la valve 56 sont chacune dans leur première position et définissent un mode évaporation de fluide réfrigérant, c'est-à-dire que le fluide réfrigérant passe d'un état liquide à un état gazeux en circulant à travers l'échangeur thermique 1, par échange de chaleur avec le flux d'air qui passe au travers de la surface d'échange. Dans le mode évaporation du fluide réfrigérant, le fluide réfrigérant capte des calories en circulant à travers les tubes 12 du premier circuit d'échange de chaleur 4 et par les tubes 30 du deuxième circuit d'échange de chaleur 6, les calories étant cédées par un flux d'air circulant dans la surface d'échange de chaleur 2, c'est-à-dire autour et entre les tubes 12, 30. Le fluide réfrigérant arrivant à l'état liquide ou diphasique dans la ligne d'arrivée 44, il peut changer d'état pour passer d'un état liquide à un état gazeux à cause de l'augmentation de sa température provoquée par la captation de calories présent dans le flux d'air en passant dans les tubes 12, 30.

Le terme « première position » de la vanne quatre voies 48, de la vanne 64 et de la valve 56 fait référence à une coopération simultanée entre elles pour guider le fluide réfrigérant à travers l'échangeur thermique 1 dans le mode évaporation du fluide réfrigérant. La vanne quatre voies 48, la vanne 64 et la valve 56 sont dans la première position notamment lorsque le boucle de fluide réfrigérant est utilisée pour chauffer un flux d'air destiné à circuler vers l'habitacle du véhicule.

Plus particulièrement, lorsque la vanne quatre voies 48, la vanne 64 et la valve 56 sont dans la première position, une première partie du fluide réfrigérant circule vers le premier circuit d'échange de chaleur 4 à travers d'une part le deuxième canal 58, et donc vers le premier orifice d'entrée 16 du premier collecteur d'entrée 8, et d'autre part le troisième canal 60 vers le deuxième orifice d'entrée 20 du premier collecteur d'entrée 8. On comprend ici que le fluide réfrigérant circulant dans le troisième canal 60 en traversant la première passe 50 de la vanne quatre voies 48 pour circuler à travers la deuxième orifice d'entrée 20 de fluide réfrigérant. La première partie du fluide réfrigérant circule ensuite dans la première chambre collectrice 14 et dans la deuxième chambre collectrice 18 vers le premier collecteur de sortie 10 à travers le premier ensemble de tubes 12. La première partie de fluide réfrigérant circule ensuite du premier collecteur de sortie 10 vers la première conduite 62 de la ligne de sortie 46 à travers l'orifice de sortie 24 du premier collecteur de sortie 10.

Similairement, lorsque la vanne quatre voies 48, la vanne 64 et la valve 56 sont dans la première position, une deuxième partie du fluide réfrigérant circule vers le deuxième circuit d'échange de chaleur 6 à travers le premier canal 54 vers le deuxième collecteur d'entrée 26. La deuxième partie du fluide réfrigérant pénètre dans le deuxième collecteur d'entrée 26 à travers l'entrée de fluide 32, puis circule vers le deuxième collecteur de sortie 28 à travers le deuxième ensemble de tubes 30. Plus précisément, la deuxième partie de fluide réfrigérant circule vers la première cavité collectrice 34 et la deuxième cavité collectrice 38 du deuxième collecteur de sortie 28. Le fluide réfrigérant circulant dans la première cavité collectrice 34 circule ensuite vers la deuxième conduite 66 de la ligne de sortie 46 en passant à travers la première sortie 36 de fluide du deuxième collecteur de sortie 28. Le fluide réfrigérant circulant dans la deuxième cavité collectrice 38 circule ensuite vers la troisième conduite 68 de la ligne de sortie 46 en passant à travers la deuxième sortie 40 de fluide réfrigérant du deuxième collecteur de sortie 28. Plus particulièrement, le fluide réfrigérant circule vers la troisième conduite 68 de la ligne de sortie 46 en passant à travers la deuxième sortie 40 de fluide réfrigérant puis à travers la deuxième passe 52 de la vanne quatre voies 48.

Selon un mode de réalisation de l'invention, le premier circuit d'échange de chaleur 4 et le deuxième circuit d'échange de chaleur 6 sont parcourus par le fluide réfrigérant selon un profil en « I » vus dans un plan principal d'extension de la surface d'échange de chaleur 2 lorsque la vanne quatre voies 48, la vanne 64 et la valve 56 sont dans leur première position. On comprend ici que le fluide réfrigérant circule selon un seul sens de circulation dans le premier circuit d'échange de chaleur 4 depuis le premier collecteur d'entrée 8 vers le premier collecteur de sortie 10, et également dans un seul sens de circulation dans le deuxième circuit d'échange de chaleur 6 depuis le deuxième collecteur d'entrée 26 vers le deuxième collecteur de sortie 28.

Ainsi, lorsque la vanne quatre voies 48, la vanne 64 et la valve 56 sont dans la première position, le fluide réfrigérant circule dans le premier circuit d'échange de chaleur 4 selon un premier sens et dans le deuxième circuit d'échange de chaleur 6 selon un deuxième sens opposé au premier sens. Par la disposition du premier ensemble de tubes 12 par rapport au deuxième ensemble de tubes 30, le fluide réfrigérant circule dans un tube dans le sens opposé à la circulation du fluide réfrigérant dans les tubes voisins.

Tel qu'illustré sur la figure 3, la vanne quatre voies 48, la vanne 64 et la valve 56 sont chacune dans leur deuxième position et définissent un mode condensation de fluide réfrigérant, c'est-à-dire que le fluide réfrigérant passe d'un état gazeux à un état liquide. Dans le mode condensation du fluide réfrigérant, le fluide réfrigérant cède des calories en circulant à travers les tubes 12, 30 au profit d'un flux d'air circulant dans la surface d'échange de chaleur 2, c'est-à-dire autour et entre les tubes. Le fluide réfrigérant arrivant à l'état gazeux dans la ligne d'arrivée 44, il peut changer d'état pour passer d'un état gazeux à un état liquide à cause de la diminution de sa température provoquée par la cession de calories au flux d'air, en passant dans les tubes.

Le terme « deuxième position » de la vanne quatre voies 48, de la vanne 64 et de la valve 56 fait référence à une coopération simultanée entre elles pour guider le fluide réfrigérant à travers l'échangeur thermique 1 dans le mode de condensation du fluide réfrigérant. La vanne quatre voies 48, la vanne 64 et la valve 56 sont dans la deuxième position notamment lorsque la boucle de fluide réfrigérant est utilisée pour refroidir un flux d'air destiné à circuler vers l'habitacle du véhicule.

Plus particulièrement, lorsque la vanne quatre voies 48, la vanne 64 et la valve 56 sont dans la deuxième position, une première partie du fluide réfrigérant circule vers le premier circuit d'échange de chaleur 4 à travers seulement le deuxième canal 58 vers le premier orifice d'entrée 16 du premier collecteur d'entrée 8. On comprend ici qu'à la différence du mode évaporation, la première partie du fluide réfrigérant pénètre dans le premier circuit d'échange de chaleur 4 uniquement par le premier orifice d'entrée 16 du premier collecteur de sortie 10. Le fluide réfrigérant circule ensuite depuis la première chambre collectrice 14 à travers la partie 21 du premier ensemble de tubes 12 vers le premier collecteur de sortie 10. La position de la vanne 64 empêche ici le fluide réfrigérant de circuler depuis l'orifice de sortie 24 du premier collecteur de sortie 10 vers la ligne de sortie 46 à travers la première conduite 62. Le fluide réfrigérant circule alors vers le premier collecteur d'entrée 8, et plus particulièrement vers la deuxième chambre collectrice 18 du premier collecteur d'entrée 8 à travers une autre partie 23 du premier ensemble de tubes 12. Le fluide réfrigérant circulant dans la deuxième chambre collectrice 18 circule ensuite vers la troisième conduite 68 de la ligne de sortie 46 en passant à travers le deuxième orifice d'entrée 20 de fluide réfrigérant du premier collecteur d'entrée 8. Plus particulièrement, le fluide réfrigérant circule vers la troisième conduite 68 de la ligne de sortie 46 en passant à travers le deuxième orifice d'entrée 20 de fluide réfrigérant puis à travers la deuxième passe 52 de la vanne quatre voies 48.

Lorsque la vanne quatre voies 48, la vanne 64 et la valve 56 sont dans la deuxième position, une deuxième partie du fluide réfrigérant circule vers le deuxième circuit d'échange de chaleur 6 à travers le troisième canal 60 vers la deuxième sortie 40 de fluide réfrigérant du deuxième collecteur de sortie 28. En effet, la deuxième position de la valve 56 bloque la circulation du fluide réfrigérant à travers le premier canal 54, la deuxième partie du fluide réfrigérant traversant alors la première passe 50 de la vanne quatre voies 48 pour circuler depuis le troisième canal 60 vers la deuxième sortie 40 de fluide réfrigérant du deuxième collecteur de sortie 28. La deuxième partie de fluide réfrigérant pénètre ainsi dans le deuxième collecteur de sortie 28 à travers la deuxième sortie 40 de fluide réfrigérant et à travers la deuxième cavité collectrice 38, puis circule vers le deuxième collecteur d'entrée 26 à travers une partie 33 du deuxième ensemble de tubes 30. Ensuite, la deuxième partie de fluide réfrigérant circule vers la première cavité collectrice 34 du deuxième collecteur de sortie 28 depuis le deuxième collecteur d'entrée 26 à travers une autre partie 31 du deuxième ensemble de tubes 30. Le fluide réfrigérant circulant dans la première cavité collectrice 34 circule ensuite vers la deuxième conduite 66 de la ligne de sortie 46 en passant à travers la première sortie 36 de fluide du deuxième collecteur de sortie 28.

Selon un mode de réalisation de l'invention, le premier circuit d'échange de chaleur 4 et le deuxième circuit d'échange de chaleur 6 sont parcourus par le fluide réfrigérant selon un profil en « U » vus dans un plan principal d'extension de la surface d'échange de chaleur 2 lorsque la vanne quatre voies 48, la vanne 64 et la valve 56 sont dans leur deuxième position. On comprend ici que le fluide réfrigérant circule selon deux sens de circulation dans le premier circuit d'échange de chaleur 4 depuis le premier collecteur d'entrée 8 vers le premier collecteur de sortie 10 à travers la partie 21 du premier ensemble de tubes 12, puis depuis le premier collecteur de sortie 10 vers le premier collecteur d'entrée 8 à travers une autre partie 23 du premier ensemble de tubes 12, et dans le deuxième circuit d'échange de chaleur 6 depuis le deuxième collecteur de sortie 28 vers le deuxième collecteur d'entrée 26 à travers une partie 33 du deuxième ensemble de tubes 30, puis depuis le deuxième collecteur d'entrée 26 vers le deuxième collecteur de sortie 28 à travers une autre partie 31 du deuxième ensemble de tubes 30.

Similairement à ce qui a été décrit ci-dessus, le fluide réfrigérant circule ainsi dans un tube 12, 30 toujours selon un sens opposé à au moins un tube 12, 30 voisin. Plus particulièrement, un tube 12 du premier circuit d'échange de chaleur 4 est encadré selon la direction d'empilement E par au moins un tube 30 du deuxième circuit d'échange de chaleur 6. On comprend donc, que même lorsque le premier circuit d'échange de chaleur 4 et le deuxième circuit d'échange de chaleur 6 sont parcourus par le fluide réfrigérant selon un profil en « U », le fluide réfrigérant circule dans un premier sens dans le tube 12 du premier circuit d'échange de chaleur 4 et dans un sens opposé dans le tube 30 du deuxième circuit d'échange de chaleur 6, voisin dudit tube 12.

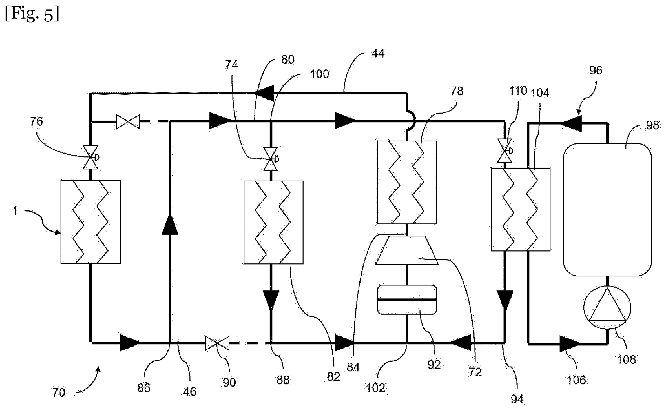

Tel qu'illustré sur les figures 4 et 5, la boucle de fluide réfrigérant 70 comprend au moins un organe de compression 72 du fluide réfrigérant, l'échangeur thermique 1 décrit ci-dessus, un premier organe de détente 74 et un deuxième organe de détente 76, un premier échangeur de chaleur 78 entre le fluide réfrigérant et un flux d'air, et un réseau de canalisations reliant entre eux ces composants de la boucle de fluide réfrigérant 70. Avantageusement, la boucle de fluide réfrigérant 70 comprend une ligne de détour 80 et un deuxième échangeur de chaleur 82 installé sur la ligne de détour 80.

Plus particulièrement, la ligne d'arrivée 44 de l'échangeur thermique 1 s'étend depuis le premier échangeur de chaleur 78 jusqu'à l'échangeur thermique 1, la ligne de sortie 46 de l'échangeur thermique 1 s'étendant entre l'échangeur thermique 1 et l'organe de compression 72, l'organe de compression 72 étant relié fluidiquement au premier échangeur de chaleur 78 par une canalisation 84. On comprend que la boucle de fluide réfrigérant 70 forme un circuit fermé dans lequel le fluide réfrigérant circule, par exemple, dans la ligne de sortie 46 depuis l'échangeur thermique 1 jusqu'à l'organe de compression 72, puis à travers la canalisation 84 depuis l'organe de compression 72 jusqu'au premier échangeur de chaleur 78, et enfin dans la ligne d'arrivée 44 depuis le premier échangeur de chaleur 78 jusqu'à l'échangeur thermique 1.

Comme décrit auparavant, l'échangeur thermique 1 réalise un échange thermique entre le fluide réfrigérant et un premier flux d'air provenant de l'extérieur de l'habitacle du véhicule.

Le premier échangeur de chaleur 78 et le deuxième échangeur de chaleur 82 sont quant à eux configurés pour réaliser un échange thermique entre le fluide réfrigérant et un deuxième flux d'air destiné à circuler vers l'habitacle du véhicule, appelé flux d'air intérieur. Dans cette configuration, le fluide réfrigérant circulant à travers chacun de ces échangeurs de chaleur échange des calories pour chauffer ou refroidir le deuxième flux d'air.

L'organe de compression 72 quant à lui est configuré pour augmenter la pression du fluide réfrigérant. On comprend de cela qu'une pression du fluide réfrigérant dans la ligne de sortie 46 est inférieure à une pression du fluide réfrigérant circulant dans la canalisation 84 entre l'organe de compression 72 et le premier échangeur de chaleur 78.

La ligne de détour 80 comprend une première intersection 86 avec la ligne de sortie 46 et une deuxième intersection 88 avec la ligne de sortie 46, la ligne de détour 80 s'étendant entre ces deux intersections 86, 88. Le fluide réfrigérant circulant dans la ligne de sortie 46 peut circuler directement depuis l'échangeur thermique 1 jusqu'à l'organe de compression 72, ou circuler à travers la ligne de détour 80 pour traverser le deuxième échangeur de chaleur 82.

Préférentiellement, la boucle de fluide réfrigérant 70 comprend au moins un organe de régulation 90 de la circulation du fluide réfrigérant apte à prendre une première position reliant directement fluidiquement le premier échangeur de chaleur 78 à la ligne de sortie 46 et une deuxième position bloquant la circulation du fluide réfrigérant à travers une portion de la ligne de sortie 46. Le changement de position de l'organe de régulation 90 est ici corrélé au changement de positions de la vanne quatre voies 48, de la vanne 64 et de la valve 56. On comprend que, lorsque l'organe de régulation 90 est dans la première position, le fluide réfrigérant circule à travers la ligne de sortie 46 directement vers l'organe de compression 72 tandis qu'il circule à travers la ligne de détour 80 lorsque l'organe de régulation 90 est dans la deuxième position.

Avantageusement, le premier organe de détente 74 est installé sur la ligne de détour 80, entre le deuxième échangeur de chaleur 82 et l'échangeur thermique 1. Le premier organe de détente 74 est quant à lui configuré pour abaisser la pression du fluide réfrigérant lorsque l'échangeur thermique 1 est en mode condensateur. On comprend de cela qu'une pression du fluide réfrigérant dans la ligne de détour 80 entre le premier organe de détente 74 et le deuxième échangeur de chaleur 82 est inférieure à une pression du fluide réfrigérant circulant entre l'échangeur thermique 1 et le premier organe de détente 74.

Similairement, le deuxième organe de détente 76 est installé sur la ligne d'arrivée 44, entre le premier échangeur de chaleur 78 et les circuits d'échange de chaleur 4, 6 de l'échangeur thermique 1 et est également configuré pour abaisser la pression du fluide réfrigérant lorsque l'échangeur thermique 1 est en mode évaporateur. On comprend de cela qu'une pression du fluide réfrigérant dans la ligne d'arrivée 44 entre le premier échangeur de chaleur 78 et le deuxième organe de détente 76 est inférieure à une pression du fluide réfrigérant circulant entre le deuxième organe de détente 76 et l'échangeur thermique 1.

Par ailleurs, la boucle de fluide réfrigérant 70 comprend au moins un dispositif d'accumulation 92 de fluide réfrigérant installé sur la ligne de sortie 46 entre l'organe de compression 72 et l'échangeur thermique 1. Avantageusement, le dispositif d'accumulation 92 est disposé entre la deuxième intersection 88 et l'organe de compression 72. Le dispositif d'accumulation 92 est configuré pour contenir un volume fluctuable de fluide réfrigérant permettant d'absorber les variations du volume occupé par le fluide réfrigérant dans la boucle de fluide réfrigérant 70, ce volume variant à cause des changements de pression et température subis.

La boucle de fluide réfrigérant 70 comprend également une ligne de gestion thermique 94 d'un système de gestion thermique 96 d'un élément électrique et/ou électronique 98 du véhicule, la ligne de gestion thermique 94 s'étendant depuis la ligne de détour 80 jusqu'à la ligne de sortie 46. Plus précisément, la boucle de fluide réfrigérant 70 comprend une première bifurcation 100 entre la ligne de gestion thermique 94 et la ligne de détour 80 et une deuxième bifurcation 102 entre la ligne de gestion thermique 94 et la ligne de sortie 46, la première bifurcation 100 étant disposée entre la première intersection 86 et le premier organe de détente 74, la deuxième bifurcation 102 étant disposée entre la deuxième intersection 88 et le dispositif d'accumulation 92.

La boucle de fluide réfrigérant 70 comprend un organe d'échange thermique 104 entre le fluide réfrigérant circulant dans la ligne de gestion thermique 94 et un fluide caloporteur circulant à travers le système de gestion thermique 96. Ce dernier comprend par ailleurs une ligne de fluide caloporteur 106 et au moins un organe de pompage 108 forçant la circulation du fluide caloporteur à travers la ligne de fluide caloporteur 106. On comprend que le fluide réfrigérant circulant dans la ligne de gestion thermique 94 à travers l'organe d'échange thermique 104 échange des calories avec le fluide caloporteur du système de gestion thermique 96 dans le but de chauffer et/ou refroidir l'élément électrique et/ou électronique 98 du véhicule.

Par ailleurs, la boucle de fluide réfrigérant 70 peut comprendre un troisième organe de détente 110 disposé sur la ligne de gestion thermique 94 entre la première bifurcation 100 et l'organe d'échange de chaleur 104, et destiné à détendre le fluide réfrigérant en amont de l'organe d'échange de chaleur 104 notamment lorsque l'échangeur thermique 1 est en mode condenseur.

On va maintenant décrire la circulation du fluide réfrigérant à travers la boucle de fluide réfrigérant 70 en référence aux figures 4 et 5.

La boucle de fluide réfrigérant 70 met en œuvre une fonction de chauffage du flux d'air envoyé dans l'habitacle, tel qu'illustré sur la figure 4. La boucle de fluide réfrigérant 70 met également en œuvre une fonction de refroidissement du flux d'air envoyé dans l'habitacle, tel qu'illustré sur la figure 5.

Tel que visible sur la figure 4, la vanne quatre voies 48, la vanne 64, la valve 56 ainsi que le organe de régulation 90 sont dans leur première position de sorte à guider le fluide réfrigérant à travers un circuit de chauffage du flux d'air envoyé dans l'habitacle, c'est-à-dire respectivement à travers l'échangeur thermique 1, la ligne de sortie 46, le dispositif d'accumulation 92, l'organe de compression 72, le premier échangeur de chaleur 78, la ligne d'arrivée 44, le deuxième organe de détente 76 et enfin à travers l'échangeur thermique 1. Dans cette configuration, l'organe de compression 72 élève la pression du fluide réfrigérant, augmentant ainsi sa température, puis le fluide réfrigérant circule à travers le premier échangeur de chaleur 78 où il est condensé. Le fluide réfrigérant est chauffé par l'organe de compression 72 cédant alors des calories au flux d'air envoyé vers l'habitacle circulant au travers du premier échangeur de chaleur 78. Le fluide réfrigérant circule ensuite à travers la ligne d'arrivée 44 vers l'organe de détente 76 abaissant la pression du fluide réfrigérant. Ce dernier circule ensuite à travers l'échangeur thermique 1, fonctionnant alors en mode évaporateur, puis retourne vers l'organe de compression 72.

Inversement, et tel que visible sur la figure 5, la vanne quatre voies 48, la vanne 64, la valve 56 ainsi que le organe de régulation 90 sont dans leur deuxième position de sorte à guider le fluide réfrigérant à travers un circuit de refroidissement du flux d'air envoyé dans l'habitacle, c'est-à-dire respectivement à travers l'échangeur thermique 1, la ligne de sortie 46, la ligne de détour 80 le premier organe de détente 74, le deuxième échangeur de chaleur 82, le dispositif d'accumulation 92, l'organe de compression 72, le premier échangeur de chaleur 78, la ligne d'arrivée 44, le deuxième organe de détente 76 et enfin l'échangeur thermique 1. Dans cette configuration, le fluide réfrigérant est refroidi dans l'échangeur thermique 1, fonctionnant en mode condenseur, puis est détendu au niveau du premier organe de détente 74. Le fluide réfrigérant circule ensuite à travers le deuxième échangeur de chaleur 82 pour refroidir le deuxième flux d'air.

Une partie du fluide réfrigérant circule à travers la ligne de gestion thermique 94 de sorte à traiter thermiquement le fluide caloporteur du système de gestion thermique 96.

On comprend de ce qui précède que la présente invention concerne enfin un procédé de contrôle de la boucle de fluide réfrigérant 70, le procédé comprenant une étape de chauffage d'un habitacle du véhicule durant laquelle la vanne quatre voies 48, la vanne 64 et la valve 56 sont placées chacune dans la première position et une étape de refroidissement de l'habitacle du véhicule durant laquelle la vanne quatre voies 48, la vanne 64 et la valve 56 sont placées chacune dans la deuxième position. De plus, l'organe de régulation 90 est placé dans la première position au cours de l'étape de chauffage et dans la deuxième position au cours de l'étape de refroidissement.

## Revendications

1. Échangeur thermique (1) pour une boucle de fluide réfrigérant (70), comprenant une surface d'échange de chaleur (2), l'échangeur thermique (1) comprenant un premier circuit d'échange de chaleur (4) comportant un premier collecteur d'entrée (8) et un premier collecteur de sortie (10) entre lesquels s'étendent longitudinalement un premier ensemble de tubes (12), le premier collecteur d'entrée (8) participant à délimiter au moins deux chambres collectrices (14, 18) chacune alimentée par au moins un orifice d'entrée (16, 20), le premier collecteur de sortie (10) comprenant au moins un orifice de sortie (24), l'échangeur thermique (1) comprenant un deuxième circuit d'échange de chaleur (6) comportant un deuxième collecteur d'entrée (26) et un deuxième collecteur de sortie (28) entre lesquels s'étendent longitudinalement un deuxième ensemble de tubes (30), le deuxième collecteur d'entrée (26) comprenant au moins une entrée (32), le deuxième collecteur de sortie (28) participant à délimiter au moins deux cavités collectrices (34, 38) chacune débouchant sur au moins une sortie (36, 40), l'échangeur thermique étant **caractérisé en ce que** les tubes du premier ensemble de tubes (12) s'empilent en alternance avec les tubes du deuxième ensemble de tubes (30), l'échangeur thermique (1) comprenant une ligne d'arrivée (44) de fluide réfrigérant et une ligne de sortie (46) de fluide réfrigérant configurées pour être reliées fluidiquement à la boucle de fluide réfrigérant (70), la ligne d'arrivée (44) étant connectée fluidiquement d'une part à l'un des orifices d'entrée (16, 20) du premier collecteur d'entrée (8) et d'autre part à l'entrée (32) du deuxième collecteur d'entrée (26), la ligne de sortie (46) étant connectée fluidiquement à l'un des orifices de sortie (36, 40) du deuxième collecteur de sortie (28) et à la sortie du premier collecteur de sortie (10), **caractérisé en ce que** l'échangeur thermique (1) comprend au moins une vanne quatre voies (48) apte à prendre une première position dans laquelle la vanne quatre voies (48) relie fluidiquement l'un des orifices d'entrée (16, 20) du premier collecteur d'entrée (8) à la ligne d'arrivée (44) et l'une des sorties (36, 40) du deuxième collecteur de sortie (28) à la ligne de sortie (46), et au moins une deuxième position dans laquelle la vanne quatre voies (48) relie fluidiquement l'un des orifices d'entrée (16, 20) du premier collecteur d'entrée (8) à la ligne de sortie (46) et l'une des sorties (36, 40) du deuxième collecteur de sortie (28) à la ligne d'arrivée (44).

2. Echangeur thermique (1) selon la revendication 1, dans lequel au moins le premier collecteur d'entrée (8) comprend une paroi de séparation (22) participant à définir une première chambre collectrice (14) et une deuxième chambre collectrice (18), au moins un premier orifice d'entrée (16) alimentant la première chambre collectrice (14) et au moins un deuxième orifice d'entrée (20) alimentant la deuxième chambre collectrice (18).

3. Echangeur thermique (1) selon l'une quelconque des revendications précédentes, dans lequel au moins le deuxième collecteur de sortie (28) comprend une paroi de séparation (42) participant à définir une première cavité collectrice (34) et une deuxième cavité collectrice (38), la première cavité collectrice (34) débouchant sur une première sortie (36) et la deuxième cavité collectrice (38) débouchant sur une deuxième sortie (40).

4. Echangeur thermique (1) selon la revendication 2 et 3, dans lequel la ligne d'arrivée (44) est reliée fluidiquement au premier orifice d'entrée (16) du premier collecteur d'entrée (8), au deuxième orifice d'entrée (20) du premier collecteur d'entrée (8) et à l'entrée (32) du deuxième collecteur d'entrée (26) lorsque la vanne quatre voies (48) est dans la première position, la ligne de sortie (46) étant raccordée fluidiquement à l'orifice de sortie (24) du premier collecteur de sortie (10), à la première sortie (36) du deuxième collecteur de sortie (28) et à la deuxième sortie (40) du deuxième collecteur de sortie (28).

5. Echangeur thermique (1) selon la revendication 2 et 3, dans lequel la ligne d'arrivée (44) est reliée fluidiquement au premier orifice d'entrée (16) du premier collecteur d'entrée (8) et à la deuxième sortie (40) du deuxième collecteur de sortie (28) lorsque la vanne quatre voies (48) est dans la deuxième position, la ligne de sortie (46) étant raccordée fluidiquement au deuxième orifice d'entrée (20) du premier collecteur d'entrée (8) et à la première sortie (36) du deuxième collecteur de sortie (28).

6. Echangeur thermique (1) selon l'une quelconque des revendications précédentes, dans lequel la ligne de sortie (46) comprend au moins une première conduite (62) reliée à l'orifice de sortie (24) du premier collecteur de sortie (10) et sur laquelle est installée une vanne (64), la vanne (64) étant apte à prendre une première position autorisant une circulation de fluide réfrigérant dans la première conduite (62) et une deuxième position interdisant la circulation de fluide réfrigérant dans la première conduite (62).

7. Echangeur thermique (1) selon l'une quelconque des revendications précédentes en combinaison avec la revendication 3, dans lequel la ligne de sortie (46) comprend une deuxième conduite (66) reliée fluidiquement à la première sortie (36) du deuxième collecteur de sortie (28).

8. Echangeur thermique (1) selon l'une quelconque des revendications précédentes en combinaison avec les revendications 2 et 3, dans lequel la ligne de sortie (46) comprend une troisième conduite (68) reliée à la vanne quatre voies (48), la vanne quatre voies (48) reliant fluidiquement la troisième conduite (68) à la deuxième sortie (40) du deuxième collecteur de sortie (28) lorsque la vanne quatre voies (48) prend la première position, la vanne quatre voies (48) reliant fluidiquement la troisième conduite (68) au deuxième orifice d'entrée (20) du premier collecteur d'entrée (8) lorsque la vanne quatre voies (48) prend la deuxième position.

9. Echangeur thermique (1) selon l'une quelconque des revendications précédentes, dans lequel la ligne d'arrivée (44) comprend au moins un premier canal (54) relié à l'entrée du deuxième collecteur d'entrée (26) et sur laquelle est installée une valve (56), la valve (56) étant apte à prendre une première position autorisant une circulation de fluide réfrigérant dans le premier canal (54) et une deuxième position interdisant la circulation de fluide réfrigérant dans le premier canal (54).

10. Echangeur thermique (1) selon l'une quelconque des revendications précédentes en combinaison avec la revendication 2, dans lequel la ligne d'arrivée (44) comprend un deuxième canal (58) relié fluidiquement au premier orifice d'entrée (16) du premier collecteur d'entrée (8).

11. Echangeur thermique (1) selon l'une quelconque des revendications précédentes en combinaison avec la revendication 2 et 3, dans lequel la ligne d'arrivée (44) comprend un troisième canal (60) relié à la vanne quatre voies (48), la vanne quatre voies (48) reliant fluidiquement le troisième canal (60) au deuxième orifice d'entrée (20) du premier collecteur d'entrée 8 lorsque la vanne quatre voies (48) prend la première position, la vanne quatre voies (48) reliant fluidiquement le troisième canal (60) à la deuxième sortie (40) du deuxième collecteur de sortie (28) lorsque la vanne quatre voies (48) prend la deuxième position.

12. Echangeur thermique (1) selon l'une quelconque des revendications précédentes en combinaison avec les revendications 6 et 9, dans lequel la vanne quatre voies (48), la vanne (64) et la valve (56) sont chacune dans leur première position pour définir un mode évaporation de fluide réfrigérant.

13. Echangeur thermique (1) selon l'une quelconque des revendications précédentes en combinaison avec les revendications 6 et 9, dans lequel la vanne quatre voies (48), la vanne (64) et la valve (56) sont chacune dans leur deuxième position pour définir un mode condensation de fluide réfrigérant.

14. Echangeur thermique (1) selon l'une quelconque des revendications précédentes en combinaison avec les revendications 6 et 9, dans lequel le premier circuit d'échange de chaleur (4) et le deuxième circuit d'échange de chaleur (6) sont des circuits en « I » vus dans un plan principal d'extension de la surface d'échange de chaleur (2) lorsque la vanne quatre voies (48), la vanne (64) et la valve (56) sont dans leur première position.

15. Echangeur thermique (1) selon l'une quelconque des revendications précédentes en combinaison avec les revendications 6 et 9, dans lequel le premier circuit d'échange de chaleur (4) et le deuxième circuit d'échange de chaleur (6) sont des circuits en « U » vus dans un plan principal d'extension de la surface d'échange de chaleur (2) lorsque la vanne quatre voies (48), la vanne (64) et la valve (56) sont dans leur deuxième position.

16. Boucle de fluide réfrigérant (70) d'un véhicule comprenant au moins un organe de compression (72), un échangeur thermique (1) caractérisé selon l'une quelconque des revendications précédentes, un premier organe de détente (74) et un deuxième organe de détente (76), un premier échangeur de chaleur (78) et un réseau de canalisations reliant entre eux ces composants de la boucle de fluide réfrigérant (70).

17. Procédé de contrôle d'une boucle de fluide réfrigérant (70) selon la revendication précédente, procédé comprenant une étape de chauffage d'un habitacle du véhicule durant laquelle la vanne quatre voies (48), la vanne (64) et la valve (56) sont placées chacune dans la première position et une étape de refroidissement de l'habitacle du véhicule durant laquelle la vanne quatre voies (48), la vanne (64) et la valve (56) sont placées chacune dans la deuxième position.

## Patentansprüche

1. Wärmeaustauscher (1) für einen Kältemittelkreislauf (70), der eine Wärmetauschfläche (2) umfasst, wobei der Wärmeaustauscher (1) einen ersten Wärmeaustauschkreis (4) umfasst, der einen ersten Einlasssammler (8) und einen ersten Auslasssammler (10) beinhaltet, zwischen denen sich längs eine erste Anordnung von Rohren (12) erstreckt, wobei der erste Einlasssammler (8) dazu beiträgt, mindestens zwei Sammelkammern (14, 18) zu begrenzen, von denen jede von mindestens einer Einlassöffnung (16, 20) versorgt wird, wobei der erste Auslasssammler (10) mindestens eine Auslassöffnung (24) umfasst, wobei der Wärmeaustauscher (1) einen zweiten Wärmeaustauschkreis (6) umfasst, der einen zweiten Einlasssammler (26) und einen zweiten Auslasssammler (28) beinhaltet, zwischen denen sich längs eine zweite Anordnung von Rohren (30) erstreckt, wobei der zweite Einlasssammler (26) mindestens einen Einlass (32) umfasst, wobei der zweite Auslasssammler (28) dazu beiträgt, mindestens zwei Sammelhohlräume (34, 38) zu begrenzen, von denen jeder an mindestens einem Auslass (36, 40) mündet, wobei der Wärmeaustauscher **dadurch gekennzeichnet ist, dass** die Rohre der ersten Anordnung von Rohren (12) sich im Wechsel mit den Rohren der zweiten Anordnung von Rohren (30) stapeln, wobei der Wärmeaustauscher (1) eine Zugangsleitung (44) für Kältemittel und eine Auslassleitung (46) für Kältemittel umfasst, die dazu ausgestaltet sind, fluidisch mit dem Kältemittelkreislauf (70) verbunden zu sein, wobei die Zugangsleitung (44) fluidisch zum einen an eine der Einlassöffnungen (16, 20) des ersten Einlasssammlers (8) und zum anderen an den Einlass (32) des zweiten Einlasssammlers (26) angeschlossen ist, wobei die Auslassleitung (46) fluidisch an eine der Auslassöffnungen (36, 40) des zweiten Auslasssammlers (28) und an den Auslass des ersten Auslasssammlers (10) angeschlossen ist, **dadurch gekennzeichnet, dass** der Wärmeaustauscher (1) mindestens ein Vierwegeventil (48) umfasst, das geeignet ist, eine erste Stellung einzunehmen, in der das Vierwegeventil (48) fluidisch eine der Einlassöffnungen (16, 20) des ersten Einlasssammlers (8) mit der Zugangsleitung (44) und einen der Auslasse (36, 40) des zweiten Auslasssammlers (28) mit der Auslassleitung (46) verbindet, und mindestens eine zweite Stellung, in der das Vierwegeventil (48) fluidisch eine der Einlassöffnungen (16, 20) des ersten Einlasssammlers (8) mit der Auslassleitung (46) und einen der Auslasse (36, 40) des zweiten Auslasssammlers (28) mit der Zugangsleitung (44) verbindet.

2. Wärmeaustauscher (1) nach Anspruch 1, wobei mindestens der erste Einlasssammler (8) eine Trennwand (22) umfasst, die dazu beträgt, eine erste Sammelkammer (14) und eine zweite Sammelkammer (18) zu definieren, wobei mindestens eine erste Einlassöffnung (16) die erste Sammelkammer (14) versorgt und wobei mindestens zweite Einlassöffnung (20) die zweite Sammelkammer (18) versorgt.

3. Wärmeaustauscher (1) nach einem der vorhergehenden Ansprüche, wobei mindestens der zweite Auslasssammler (28) eine Trennwand (42) umfasst, die dazu beiträgt, einen ersten Sammelhohlraum (34) und einen zweiten Sammelhohlraum (38) zu begrenzen, wobei der erste Sammelhohlraum (34) an einem ersten Auslass (36) mündet und wobei der zweite Sammelhohlraum (38) an einem zweiten Auslass (40) mündet.

4. Wärmeaustauscher (1) nach Anspruch 2 und 3, wobei die Zugangsleitung (44) fluidisch mit der ersten Einlassöffnung (16) des ersten Einlasssammlers (8), mit der zweiten Einlassöffnung (20) des ersten Einlasssammlers (8) und mit dem Einlass (32) des zweiten Einlasssammlers (26) verbunden ist, wenn das Vierwegeventil (48) in der ersten Stellung ist, wobei die Auslassleitung (46) fluidisch an die Auslassöffnung (24) des ersten Auslasssammlers (10), an den ersten Auslass (36) des zweiten Auslasssammlers (28) und an den zweiten Auslass (40) des zweiten Auslasssammlers (28) angeschlossen ist.

5. Wärmeaustauscher (1) nach Anspruch 2 und 3, wobei die Zugangsleitung (44) fluidisch mit der ersten Einlassöffnung (16) des ersten Einlasssammlers (8) und mit dem zweiten Auslass (40) des zweiten Auslasssammlers (28) verbunden ist, wenn das Vierwegeventil (48) in der zweiten Stellung ist, wobei die Auslassleitung (46) fluidisch an die zweite Einlassöffnung (20) des ersten Einlasssammlers (8) und an den ersten Auslass (36) des zweiten Auslasssammlers (28) angeschlossen ist.

6. Wärmeaustauscher (1) nach einem der vorhergehenden Ansprüche, wobei die Auslassleitung (46) mindestens eine erste Rohrleitung (62) umfasst, die mit der Auslassöffnung (24) des ersten Auslasssammlers (10) verbunden ist und an der ein Ventil (64) angebracht ist, wobei das Ventil (64) geeignet ist, eine erste Stellung einzunehmen, die eine Zirkulation von Kältemittel in der ersten Rohrleitung (62) zulässt, und eine zweite Stellung, die die Zirkulation von Kältemittel in der ersten Rohrleitung (62) unterbindet.

7. Wärmeaustauscher (1) nach einem der vorhergehenden Ansprüche in Verbindung mit Anspruch 3, wobei die Auslassleitung (46) eine zweite Rohrleitung (66) umfasst, die fluidisch mit dem ersten Auslass (36) des zweiten Auslasssammlers (28) verbunden ist.

8. Wärmeaustauscher (1) nach einem der vorhergehenden Ansprüche in Verbindung mit den Ansprüchen 2 und 3, wobei die Auslassleitung (46) eine dritte Rohrleitung (68) umfasst, die mit dem Vierwegeventil (48) verbunden ist, wobei das Vierwegeventil (48) die dritte Rohrleitung (68) fluidisch mit dem zweiten Auslass (40) des zweiten Auslasssammlers (28) verbindet, wenn das Vierwegeventil (48) die erste Stellung einnimmt, wobei das Vierwegeventil (48) die dritte Rohrleitung (68) fluidisch mit der zweiten Einlassöffnung (20) des ersten Einlasssammlers (8) verbindet, wenn das Vierwegeventil (48) die zweite Stellung einnimmt.

9. Wärmeaustauscher (1) nach einem der vorhergehenden Ansprüche, wobei die Zugangsleitung (44) mindestens einen ersten Kanal (54) umfasst, der mit dem Einlass des zweiten Einlasssammlers (26) verbunden ist und an dem ein Ventil (56) angebracht ist, wobei das Ventil (56) geeignet ist, eine erste Stellung einzunehmen, die eine Zirkulation von Kältemittel in dem ersten Kanal (54) zulässt, und eine zweite Stellung, die die Zirkulation von Kältemittel in dem ersten Kanal (54) unterbindet.

10. Wärmeaustauscher (1) nach einem der vorhergehenden Ansprüche in Verbindung mit Anspruch 2, wobei die Zugangsleitung (44) einen zweiten Kanal (58) umfasst, der fluidisch mit der ersten Einlassöffnung (16) des ersten Einlasssammlers (8) verbunden ist.

11. Wärmeaustauscher (1) nach einem der vorhergehenden Ansprüche in Verbindung mit Anspruch 2 und 3, wobei die Zugangsleitung (44) einen dritten Kanal (60) umfasst, der mit dem Vierwegeventil (48) verbunden ist, wobei das Vierwegeventil (48) den dritten Kanal (60) fluidisch mit der zweiten Einlassöffnung (20) des ersten Einlasssammlers 8 verbindet, wenn das Vierwegeventil (48) die erste Stellung einnimmt, wobei das Vierwegeventil (48) den dritten Kanal (60) fluidisch mit dem zweiten Auslass (40) des zweiten Auslasssammlers (28) verbindet, wenn das Vierwegeventil (48) die zweite Stellung einnimmt.

12. Wärmeaustauscher (1) nach einem der vorhergehenden Ansprüche in Verbindung mit den Ansprüchen 6 und 9, wobei das Vierwegeventil (48), das Ventil (64) und das Ventil (56) jeweils in ihrer ersten Stellung sind, um einen Kältemittelverdampfungsmodus zu definieren.

13. Wärmeaustauscher (1) nach einem der vorhergehenden Ansprüche in Verbindung mit den Ansprüchen 6 und 9, wobei das Vierwegeventil (48), das Ventil (64) und das Ventil (56) jeweils in ihrer zweiten Stellung sind, um einen Kältemittelkondensationsmodus zu definieren.

14. Wärmeaustauscher (1) nach einem der vorhergehenden Ansprüche in Verbindung mit den Ansprüchen 6 und 9, wobei der erste Wärmeaustauschkreis (4) und der zweite Wärmeaustauschkreis (6), wenn sie in einer Haupterstreckungsebene der Wärmeaustauschfläche (2) betrachtet werden, "I"-förmige Kreise sind, wenn das Vierwegeventil (48), das Ventil (64) und das Ventil (56) in ihrer ersten Stellung sind.

15. Wärmeaustauscher (1) nach einem der vorhergehenden Ansprüche in Verbindung mit den Ansprüchen 6 und 9, wobei der erste Wärmeaustauschkreis (4) und der zweite Wärmeaustauschkreis (6), wenn sie in einer Haupterstreckungsebene der Wärmeaustauschfläche (2) betrachtet werden, "U"-förmige Kreise sind, wenn das Vierwegeventil (48), das Ventil (64) und das Ventil (56) in ihrer zweiten Stellung sind.

16. Kältemittelkreislauf (70) eines Fahrzeugs, umfassend mindestens ein Verdichtungselement (72), einen Wärmeaustauscher (1), der nach einem der vorhergehenden Ansprüche gekennzeichnet ist, ein erstes Entspannungselement (74) und ein zweites Entspannungselement (76), einen ersten Wärmetauscher (78) und ein Netz aus Leitungen, die diese Komponenten des Kältemittelkreislaufs (70) untereinander verbinden.

17. Verfahren zur Steuerung eines Kältemittelkreislaufs (70) nach dem vorhergehenden Anspruch, wobei das Verfahren einen Schritt des Beheizens eines Innenraums des Fahrzeugs umfasst, während dessen das Vierwegeventil (48), das Ventil (64) und das Ventil (56) jeweils in die erste Stellung versetzt werden, und einen Schritt des Kühlens des Innenraums des Fahrzeugs, während dessen das Vierwegeventil (48), das Ventil (64) und das Ventil (56) jeweils in die zweite Stellung versetzt werden.

## Claims

1. Heat exchanger (1) for a refrigerant-fluid loop (70), comprising a heat exchange surface (2), the heat exchanger (1) comprising a first heat exchange circuit (4) having a first inlet header (8) and a first outlet header (10) between which a first set of tubes (12) longitudinally extends, the first inlet header (8) contributing to delimiting at least two collecting chambers (14, 18) each supplied via at least one inlet orifice (16, 20), the first outlet header (10) comprising at least one outlet orifice (24), the heat exchanger (1) comprising a second heat exchange circuit (6) having a second inlet header (26) and a second outlet header (28) between which a second set of tubes (30) longitudinally extends, the second inlet header (26) comprising at least one inlet (32), the second outlet header (28) contributing to delimiting at least two collecting cavities (34, 38) each opening into at least one outlet (36, 40), the heat exchanger being **characterized in that** the tubes of the first set of tubes (12) are stacked alternately with the tubes of the second set of tubes (30), the heat exchanger (1) comprising a refrigerant-fluid inlet line (44) and a refrigerant-fluid outlet line (46) which are configured to be fluidically connected to the refrigerant-fluid loop (70), the inlet line (44) being fluidically connected on one side to one of the inlet orifices (16, 20) of the first inlet header (8) and on the other side to the inlet (32) of the second inlet header (26), the outlet line (46) being fluidically connected to one of the outlet orifices (36, 40) of the second outlet header (28) and to the outlet of the first outlet header (10), **characterized in that** the heat exchanger (1) comprises at least one four-way valve (48) capable of adopting a first position in which the four-way valve (48) fluidically connects one of the inlet orifices (16, 20) of the first inlet header (8) to the inlet line (44) and one of the outlets (36, 40) of the second outlet header (28) to the outlet line (46), and at least one second position in which the four-way valve (48) fluidically connects one of the inlet orifices (16, 20) of the first inlet header (8) to the outlet line (46) and one of the outlets (36, 40) of the second outlet header (28) to the inlet line (44).

2. Heat exchanger (1) according to Claim 1, wherein at least the first inlet header (8) comprises a separating wall (22) contributing to defining a first collecting chamber (14) and a second collecting chamber (18), at least a first inlet orifice (16) supplying the first collecting chamber (14) and at least a second inlet orifice (20) feeding the second collecting chamber (18).

3. Heat exchanger (1) according to either one of the preceding claims, wherein at least the second outlet header (28) comprises a separating wall (42) contributing to defining a first collecting cavity (34) and a second collecting cavity (38), the first collecting cavity (34) opening into a first outlet (36) and the second collecting cavity (38) opening into a second outlet (40).

4. Heat exchanger (1) according to Claims 2 and 3, wherein the inlet line (44) is fluidically connected to the first inlet orifice (16) of the first inlet header (8), to the second inlet orifice (20) of the first inlet header (8) and to the inlet (32) of the second inlet header (26) when the four-way valve (48) is in the first position, the outlet line (46) being fluidically connected to the outlet orifice (24) of the first outlet header (10), to the first outlet (36) of the second outlet header (28) and to the second outlet (40) of the second outlet header (28).

5. Heat exchanger (1) according to Claims 2 and 3, wherein the inlet line (44) is fluidically connected to the first inlet orifice (16) of the first inlet header (8) and to the second outlet (40) of the second outlet header (28) when the four-way valve (48) is in the second position, the outlet line (46) being fluidically connected to the second inlet orifice (20) of the first inlet header (8) and to the first outlet (36) of the second outlet header (28).

6. Heat exchanger (1) according to any one of the preceding claims, wherein the outlet line (46) comprises at least a first conduit (62) which is connected to the outlet orifice (24) of the first outlet header (10) and on which a valve (64) is installed, the valve (64) being able to adopt a first position allowing refrigerant fluid to circulate in the first conduit (62) and a second position preventing refrigerant fluid from circulating in the first conduit (62).

7. Heat exchanger (1) according to any one of the preceding claims in combination with Claim 3, wherein the outlet line (46) comprises a second conduit (66) fluidically connected to the first outlet (36) of the second outlet header (28).

8. Heat exchanger (1) according to any one of the preceding claims in combination with Claims 2 and 3, wherein the outlet line (46) comprises a third conduit (68) connected to the four-way valve (48), the four-way valve (48) fluidically connecting the third conduit (68) to the second outlet (40) of the second outlet header (28) when the four-way valve (48) adopts the first position, the four-way valve (48) fluidically connecting the third conduit (68) to the second inlet orifice (20) of the first inlet header (8) when the four-way valve (48) adopts the second position.

9. Heat exchanger (1) according to any one of the preceding claims, wherein the inlet line (44) comprises at least a first channel (54) which is connected to the inlet of the second inlet header (26) and on which a valve (56) is installed, the valve (56) being able to adopt a first position allowing refrigerant fluid to circulate in the first channel (54) and a second position preventing refrigerant fluid from circulating in the first channel (54).

10. Heat exchanger (1) according to any one of the preceding claims in combination with Claim 2, wherein the inlet line (44) comprises a second channel (58) fluidically connected to the first inlet orifice (16) of the first inlet header (8).

11. Heat exchanger (1) according to any one of the preceding claims in combination with Claims 2 and 3, wherein the inlet line (44) comprises a third channel (60) connected to the four-way valve (48), the four-way valve (48) fluidically connecting the third channel (60) to the second inlet orifice (20) of the first inlet header 8 when the four-way valve (48) adopts the first position, the four-way valve (48) fluidically connecting the third channel (60) to the second outlet (40) of the second outlet header (28) when the four-way valve (48) adopts the second position.

12. Heat exchanger (1) according to any one of the preceding claims in combination with Claims 6 and 9, wherein the four-way valve (48), the valve (64) and the valve (56) are each in their first position to define a refrigerant-fluid evaporation mode.

13. Heat exchanger (1) according to any one of the preceding claims in combination with Claims 6 and 9, wherein the four-way valve (48), the valve (64) and the valve (56) are each in their second position to define a refrigerant-fluid condensation mode.

14. Heat exchanger (1) according to any one of the preceding claims in combination with Claims 6 and 9, wherein the first heat exchange circuit (4) and the second heat exchange circuit (6) are "I"-shaped circuits as seen in a main plane of extent of the heat exchange surface (2) when the four-way valve (48), the valve (64) and the valve (56) are in their first position.

15. Heat exchanger (1) according to any one of the preceding claims in combination with Claims 6 and 9, wherein the first heat exchange circuit (4) and the second heat exchange circuit (6) are "U"-shaped circuits as seen in a main plane of extent of the heat exchange surface (2) when the four-way valve (48), the valve (64) and the valve (56) are in their second position.

16. Refrigerant-fluid loop (70) of a vehicle comprising at least a compression member (72), a heat exchanger (1) characterized according to any one of the preceding claims, a first expansion member (74) and a second expansion member (76), a first heat exchanger (78) and a network of pipes interconnecting these components of the refrigerant-fluid loop (70).

17. Method for controlling a refrigerant-fluid loop (70) according to the preceding claim, this method comprising a step of heating a vehicle interior during which the four-way valve (48), the valve (64) and the valve (56) are each switched to the first position and a step of cooling the vehicle interior during which the four-way valve (48), the valve (64) and the valve (56) are each switched to the second position.
